# EUROPEAN PATENT SPECIFICATION

(11) **EP 3 095 525 B1**
(45) Date of publication and mention of the grant of the patent: **21.03.2018**
(21) Application number: 16167952.7
(22) Date of filing: 02.05.2016
(51) Int. Cl.: B05B 3/04, A01G 25/09

(54) **JET IRRIGATOR**
REGNER
ARROSEUR

(30) Priority: 22.05.2015 IT UB20150819
(43) Date of publication of application: 23.11.2016
(73) Proprietor: Irrimec S.r.l., 20122 Milano (IT)
(72) Inventor: Turion, Jean Claude, 34170 Castelnau Le Lez (FR)
(74) Representative: Corradini, Corrado

(56) References cited:
- EP-A2- 2 060 167
- FR-A1- 2 982 733

## Description

The present invention relates to a jet irrigator, i.e. a device connectable to a supply conduit of a liquid, typically water, for spraying the liquid onto a terrain to be irrigated.

Background art jet irrigators are known from documents FR 2 982 733 A1 and EP 2 060 167 A2.

In particular, the present invention relates to a long-range irrigator, of a type commonly used in agriculture for irrigating terrains of medium and large dimensions.

The irrigator comprises a carriage, mobile on the terrain to be irrigated, connected to a long water supply tube which in turn is connected to a large tube-winder drum about which the tube is wound, which drum is connected in turn to a source of irrigating water supply (or another liquid) which is supplied under pressure.

The supply tube has a delivery mouth that is solidly constrained to the mobile carriage, having a vertical axis (A), and a dispensing head able to launch the liquid to a distance, borne by the mobile carriage, in fluid connection with the delivery mouth, and set coaxially rotatable with respect to the delivery mouth about the vertical axis (A).

During irrigation, while the water is being dispensed from the irrigator, the tube-winder drum is set in (slow) rotation so that it winds the supply tube and at the same time the mobile carriage is pulled over the terrain.

The irrigator further comprises movement means, associated to the dispensing head, able to rotate the dispensing head about the rotation axis (A), and a command organ of the movement means, associated to the dispensing head, which commands the dispensing head to rotate for an outward portion in a direction and for a return portion in an opposite direction, describing a circular sector having an adjustable amplitude.

The command organ is usually a feeler 61, mounted on-board the dispensing head such as to rotate solidly therewith about a vertical axis, and mobile on the dispensing head between a first operating position, in which it commands the movement means to rotate the dispensing head in a direction, and a second operating position, in which it commands the movement means to rotate the dispensing head in an opposite direction.

The feeler is displaced between the first and second operating positions by appropriate end-run stop elements which are mounted fixed with respect to the delivery mouth, and which define two abutting surfaces able to intercept distinct points of the circular trajectory that the feeler performs solidly with the dispensing head, so as to delimit an arc in which it is free to move.

Upon abutting with the end-run elements, the command organ is automatically displaced respectively from the first to the second position and vice versa, each time inverting the rotation direction of the dispensing head.

In this way, the dispensing head is forced to oscillate about the vertical rotation axis thereof, covering a certain angle of oscillation, so that the jet dispensed thereby is able to wet a portion of terrain substantially having a circular sector, the radius of which is equal to the length of cast of the jet and the angular amplitude of which is equal to the angle of oscillation of the dispensing head determined by the angle which is covered between the two end-run stops.

The angular position of the two end-run stops with respect to the mobile carriage determines both the angle of aperture of the irrigation fan range, and the orientation of the median axis of the sector with respect to the delivery mouth and thus with respect to the terrain where the mobile carriage is located.

In the majority of irrigators at present known, the regulating of the angle of aperture is done before the dispensing head enters into operation, by manually displacing the end-run stop elements and blocking them time by time in different positions according to the individual cases.

Irrigators are known, however, which comprise automatic regulating systems of the angle of aperture of the dispensing head, which do not require a manual intervention by the operator and which can be set in function during irrigation, without any need to interrupt the functioning of the irrigator.

However, with known systems it is not possible to operate a variation of the direction of the launch of the irrigator by 180° degrees or more, it is in fact possible, as mentioned in the foregoing, to vary the angle of aperture, i.e. the angle of the circular sector of the terrain which is irrigated, while always operating in the environs of a median direction of the sector which does not vary by many degrees and which it is however not possible to vary by 180° or more. In other words, it is not possible to rotate, with respect to the terrain which is irrigated, the irrigation fan range produced by the dispensing head to the point of displacing it in the opposite direction.

It would in many cases be desirable to be able to do this typically when the surface of the terrain to be irrigated borders a passage road, or in any case with a zone that is not to be wetted by the irrigation liquid.

In these cases, in fact, it is a good rule to proceed as follows:
- in the initial step the irrigator carriage is substantially arranged at the edge of the terrain, with the angle of aperture orientated such that the direction of the median jet is facing in the advancement direction of the carriage, and an initial irrigation portion is carried out in that configuration, in which the terrain located beyond the border is not irrigated, as intended;
- in the second step, the angle of aperture of the irrigator is manually rotated by 180 degrees, so that the median jet is facing in the opposite direction to the advancement of the carriage, and the remaining irrigation portion is carried out, or in any case the portion bearing the mobile carriage close to the tube winder, in which portion the jet does not strike the tube-winder carriage (as is intended).

An aim of the present invention is to realise an irrigator in which it is possible to operate a rotation by at least 180° of the direction of the median dispensing jet which does not require a manual intervention by the operators and which can be actuated during irrigation, without interrupting the functioning of the irrigator.

These and other aims are attained by the present invention as it is characterised in the claims.

The invention is set out in detail in the following with the aid of the accompanying figures which illustrate an embodiment thereof by way of non-exclusive example.
Figure 1 is a general view of the irrigator.
Figure 2 is a larger-scale detail of the central portion of figure 1, which illustrates the dispensing mouth, the intermediate support and the lower part of the dispensing head.
Figure 3 is a three-dimensional exploded view of the intermediate support
Figure 4 is a three-dimensional view of the intermediate support
Figure 5 is a plan view from above of figure 4.
Figure 6 is a plan view from the side of figure 4 in the direction of the arrow F1.
Figure 7 is a view from the side of figure 4 in the direction of the arrow F2.
Figure 8 is a section along an axial vertical plane of a simplified embodiment of the irrigator of figure 1.
Figure 9 is a three-dimensional view of the intermediate support of figure 8.

The irrigator, denoted in its entirety by reference numeral 10, comprises a carriage 11 that is mobile on a terrain to be irrigated (for example by means of wheels 12, or a sled), connected to a pressurised source of liquid supply (not illustrated in the figures), by means of a flexible tube 13, having a delivery mouth 15 that is solidly constrained to the mobile carriage, having a vertical axis A.

In the embodiment illustrated in the figures, the mobile carriage 11 bears a rigid vertical tube 14 at an upper end of which the delivery mouth 15 is situated, while a downstream end of the flexible tube 13 is fixed at the lower end, which is destined to be connected, with the upstream end, to a large tube-winder drum (not illustrated in the figures) about which the tube 13 is wound; the drum being connected in turn to a source of irrigating water supply (or another liquid) which is placed under pressure.

In the upper part, the irrigator 10 comprises a dispensing head 20 able to launch the liquid to a distance, borne by the mobile carriage 11, in fluid connection with the delivery mouth 15, and set coaxially rotatable with respect to the delivery mouth 15 about the vertical axis A. The head 20 comprises a launch 22, inclined from below to above, with respect to the rotation axis A, internally of which the liquid to be dispensed is accelerated and pushed with great velocity through the outlet mouth 23.

An intermediate tubular support 30 is interposed between the delivery mouth 15 and the dispensing head 20 coaxial to the axis A and placing the mouth 15 and the head 20 in connection, having two portions, an upper portion 31 and a lower portion 32, which are coupled to one another, reciprocally rotatingly, with a liquid seal, about axis A, where:
the lower portion 32 is solidly constrained to the delivery mouth 15 and the upper portion 31 supports the dispensing head 20 in such a way that the dispensing head 20 is free to rotate about the axis A with respect to the upper portion 32.

In the embodiment illustrated in the figures, an upper tubular sleeve 33 is fixed on the upper portion 31, which sleeve 33 is coupled to the lower end portion 21 of the head 20, reciprocally rotatably about the axis A; the upper portion 31 comprises a lower sleeve 34, solidly joined to the upper sleeve 33, which is conformed so as to realise a liquid-sealed coupling with reciprocal rotation with the lower portion 32.

The water (or other liquid) coming from the delivery mouth 15 is placed in connection with the dispensing head 20 via the internal channel of the intermediate tubular support 30, and is launched in a jet on the surface to be irrigated, via the wand 22.

Movement means 50 (of known type) are applied to the dispensing head 20, able to rotate the dispensing head 20 about the rotation axis A, with respect to the delivery mouth 15, with an alternating motion, for an outward portion in a direction and for a return portion in an opposite direction, describing a circular sector; further, a command system of the movement means is applied, which commands the inversion of the rotation direction of the head 20.

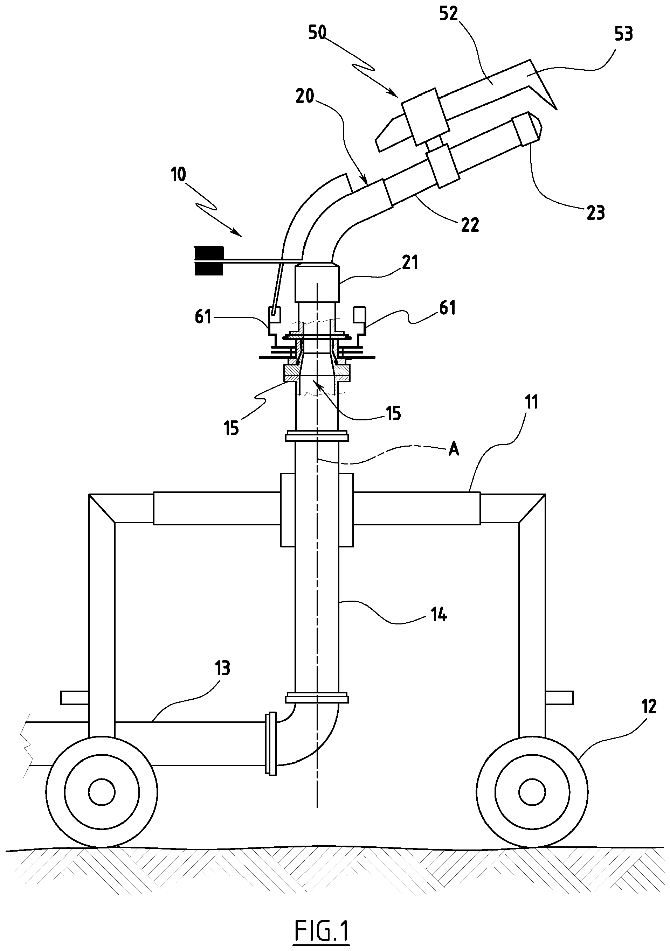

According to the embodiment illustrated in the figures (in particular in figure 1), the movement means 50 comprise an oscillating arm 52, which is hinged to the wand 22 in an intermediate point thereof. A deviator body 53 is mounted at the distal end of the oscillating arm 52, which deviator body 53 can be invested by the jet of liquid dispensed from the mouth 23. The deviator body 53 is conformed such that when it is struck by the water jet, it receives a tangential thrust which induces the whole dispensing head 20 to rotate about the vertical axis A. Further, the oscillating arm 52 can take on, with respect to the dispensing head 20, a first working configuration, in which the deviator body 53 receives, from the jet, a tangential thrust which induces the head 20 to rotate in a first direction, and a second working position, in which the deviator body 53 receives from the jet a tangential thrust which induces the head 20 to rotate in an opposite direction, determining an alternating motion, for an outward portion in a direction and for a return portion in an opposite direction, which describes a circular sector.

The displacement of the oscillating arm 52 between the first and second working configuration is performed by a mechanism of known type and not illustrated in detail.

In an important aspect, the mechanism is actuated by a command system which comprises:
- a feeler 61 solidly constrained in rotation with the dispensing head 20 with which it describes a circular trajectory T and mobile, with respect to the dispensing head, between a first operating position, in which it commands the movement means 50 to rotate the dispensing head 20 in a direction, and a second operating position, in which it commands the movement means to rotate the dispensing head 20 in an opposite direction, and
- two end-run stops 62 able to abuttingly receive the feeler 61 into two distinct points of the circular trajectory (T) described thereby following the rotation of the dispensing head, so as to displace the support respectively from the first operating position to the second operating position and vice versa,

In particular, in the illustrated example, the feeler 61 is a lever having a substantially vertical development, which is connected to the wand 22 so as to be able to move between the above-mentioned first and second operating position.

The movement of the feeler between the first and second operating position is obtained by means of two end-run elements 62, which are in a fixed position solidly constrained to the upper portion 31 (and adjustable) with respect to the delivery mouth 15. In the illustrated example, each end-run element 62 comprises a plate 63 having a generally rectangular shape, which lies in a vertical plane parallel to the rotation axis A.

The end-run elements 62 are positioned such as to intercept the circular trajectory T of the feeler 61 in two distinct points, so as to delimit an arc of circumference in which the feeler 61 is free to move.

Upon abutting with the end-run elements 62, the feeler 61 is forced to move, respectively displacing from the first to the second position and vice versa, so as to invert each time inverting the rotation direction of the dispensing head 20. In this way, the dispensing head 20 is constrained to oscillate about the vertical rotation axis A, performing a predetermined oscillation angle determined by the angular position of the end-run stops 62, so that the jet dispensed thereby is able to produce an irrigation fan range having a circular sector shape, the radius of which is equal to the jet dispensed and the angular amplitude of which is equal to the angle of oscillation of the dispensing head 20.

The angular position of the two end-run stops 62 with respect to the dispensing mouth (i.e. with respect to the mobile carriage 11) determines both the angle of aperture of the irrigation fan range, and the orientation of the median axis of the sector with respect to the delivery mouth 15 and thus with respect to the terrain where the mobile carriage 11 is located.

The end-run stops 62 are supported by the upper portion 31 of the intermediate support 30.

The intermediate support 30 further comprises a cogged base disc 40, coaxial to the axis A, provided with a cogged gearing 40a, solidly constrained to the upper portion 31, and a base motor means 70, solidly constrained to the lower portion 32, which constrains the angular position of the upper portion 31 to the lower portion 32 and, when actuated, is able to rotate the base cogged disc 40 in rotation, about the axis A, with respect to the lower portion 32, so as to vary the orientation of the upper portion 31.

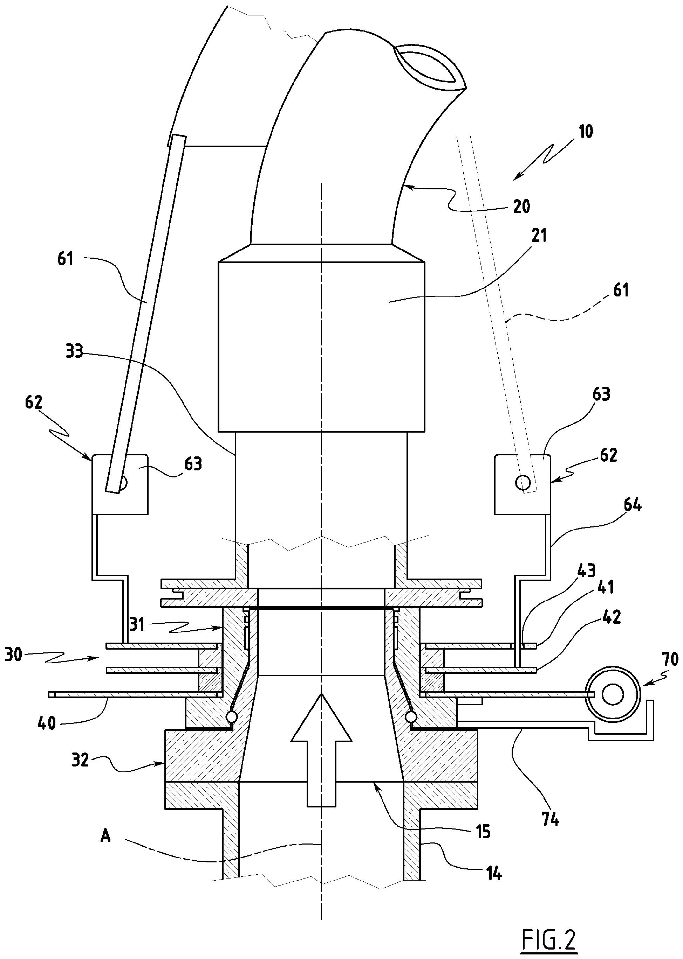

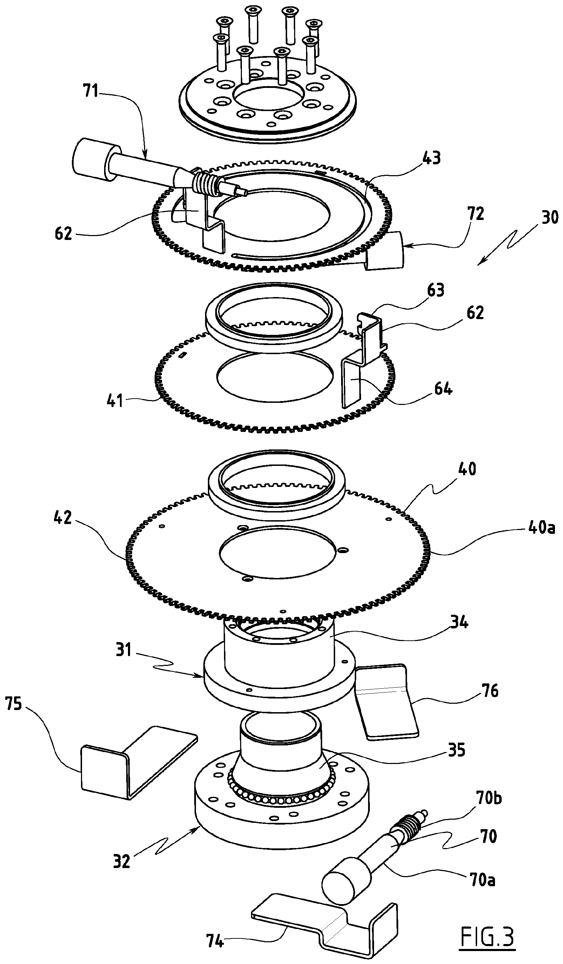

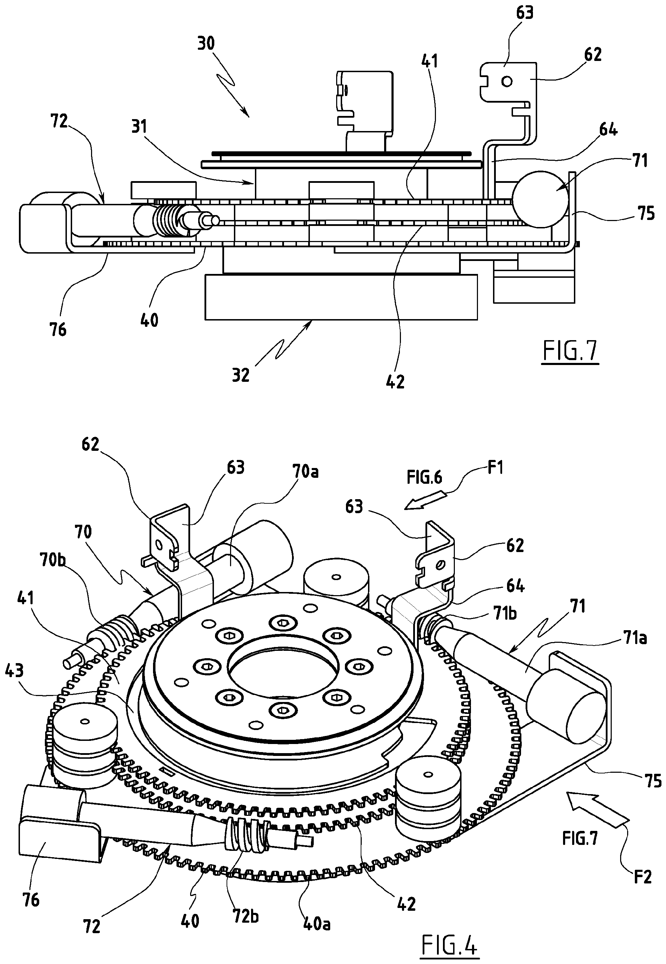

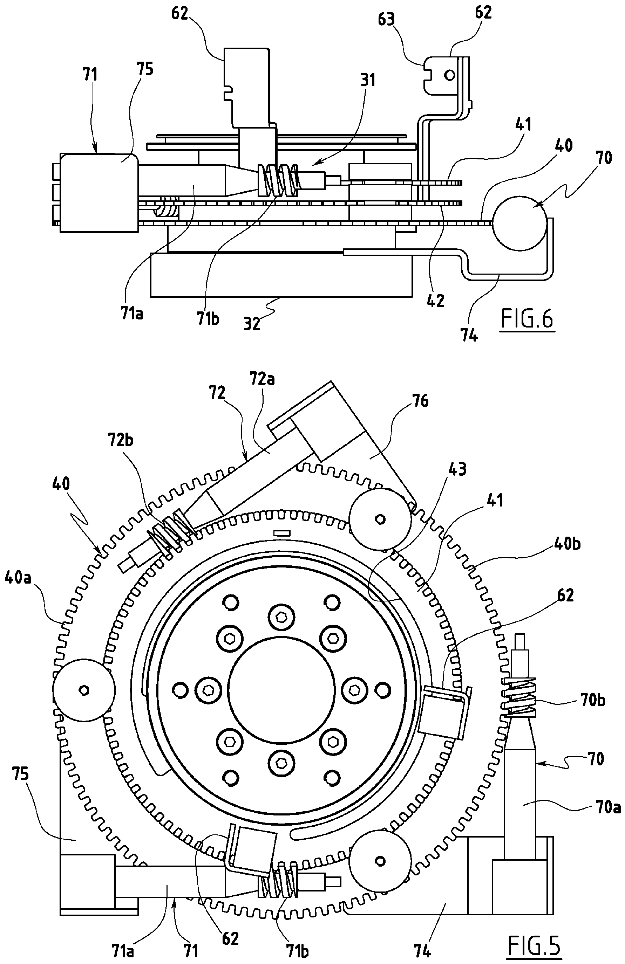

Further, in the first embodiment illustrated in figures 1-7, the intermediate support 30 comprises a first cogged wheel 41 coaxial with the axis A on which a first end-run stop 62 is fixed, and a second cogged wheel 42 coaxial with the axis A, on which the second end-run stop is fixed 62.

The two cogged wheels 41, 42) are supported, each independently of the other, by the upper portion 31, with freedom to rotate about the axis A, with respect to the upper portion 31.

Also included is a first motor means 71, supported by the base disc 40, able to move the first cogged wheel 41 in rotation about the axis A, with respect to the base disc 40, and a second motor means 72 also supported by the base disc 40, able to move the second cogged wheel 42 in rotation about the axis A, with respect to the base disc 40.

The rotation of the first cogged wheel 41 and the second cogged wheel 42 has the aim of changing the angular position of the first end-run stop 62 and respectively the second end-run stop 62 with respect to the delivery mouth 15.

In the embodiment illustrated in figures 1-7, the lower portion 32 of the intermediate support, exhibits a tubular body 35, which projects upwards with respect to the mouth 15, in which both the external surface and the internal surface exhibit a portion having a truncoconical shape.

The tubular body 35 is inserted snugly in the tubular cavity of the lower sleeve 34, and a constraint is configured between the two elements which enables only reciprocal rotation about the axis A.

The base disc 40 is solidly fixed to the sleeve 34, close to the lower end thereof; the two cogged wheels 41 and 42 exhibit respective internal rings with which they are constrained to the external surface of the sleeve 34, in an upper position with respect to the base disc 40, with freedom to rotate freely with respect to the sleeve 34. The two end-run stops 62 exhibit vertical and slim respective stems 64 a lower end of which is solidly fixed to a respective cogged wheel 41 and respectively 42.

As the first cogged wheel 41 is superposed, at a brief distance on the second cogged wheel 42, the first cogged wheel 41 exhibits a slot 43 having an arched development, with a centre thereof in the axis A, through which the stem 64 of the second end-run stop 62 fixed to the second cogged wheel 42 passes.

The base disc 40 is rotated with respect to the delivery mouth 15 by the base motor means 70, which comprises a small electric gear reducer 70a, supported by a bracket 74 fixed solidly to the lower portion 32, which actuates an endless screw 70b, coupled to the cogging 40a of the disc 40; the rotation of the screw 70b produces a consequent rotation of the disc 40 about the axis A, and with it a same rotation of the whole upper portion 31 with respect to the lower portion 32.

The rotation of the disc 40 produces an equal rotation of the two wheels 41 and 42 as they are constrained with the disc 40 by means of the respective motor means 71 and 72.

The first cogged wheel 41 is rotated with respect to the first motor means 71, which comprises a small electric gear reducer 71a, supported by a bracket 75 fixed solidly to the disc 40, which actuates an endless screw 71b, coupled to the cogging of the disc 41; where the rotation of the screw 71b produces a consequent rotation of the first wheel 41 about the axis A, with respect to the base disc 40 and therefore with respect to the upper portion 31.

The second cogged wheel 42 is rotated with respect to the first motor means 72, which comprises a small electric gear reducer 72a, supported by a bracket 76 fixed solidly to the lower portion 40, which actuates an endless screw 72b, coupled to the cogging 40a of the disc 42; where the rotation of the screw 72b produces a consequent rotation of the second wheel 42 about the axis A, with respect to the base disc 40 and therefore with respect to the upper portion 31.

In use, by activating the motor means 71 and 72, it is possible to mechanically vary the position of the two end-run stops 62 with respect to the delivery mouth 15 and thus vary the angle of aperture of the irrigation fan range of the jet emitted by the dispensing head 20; it is also possible to vary, though not in a significant way, the orientation of the median axis of the angle.

To significantly vary the orientation of the median axis of the fan range sector, for example by 180°, or any other angle (up to 360°), the base motor means 70 is activated, which produces rotation over any angle (for example by 180°), of the whole upper portion 31 and with it the two wheels 41 and 42 which bear the end-run stops 62 with respect to the dispensing mouth 15, in this way varying, by the same angle, the orientation of the median axis of the fan sector with respect to the terrain on which the mobile carriage 11 is located.

These operations can be realised at a distance, and therefore while the irrigator is functioning.

Further, the management of the command system of the movement means can advantageously be actuated automatically by an electronic command unit, which can comprise sensor means able to detect the angular position of the end-run stops with respect to the position of the dispensing mouth 15.

The electronic unit can be advantageously programmed so that during the irrigation operations the oscillation of the dispensing head is modified on the basis of the program in a totally automatic way, without the intervention of an operator.

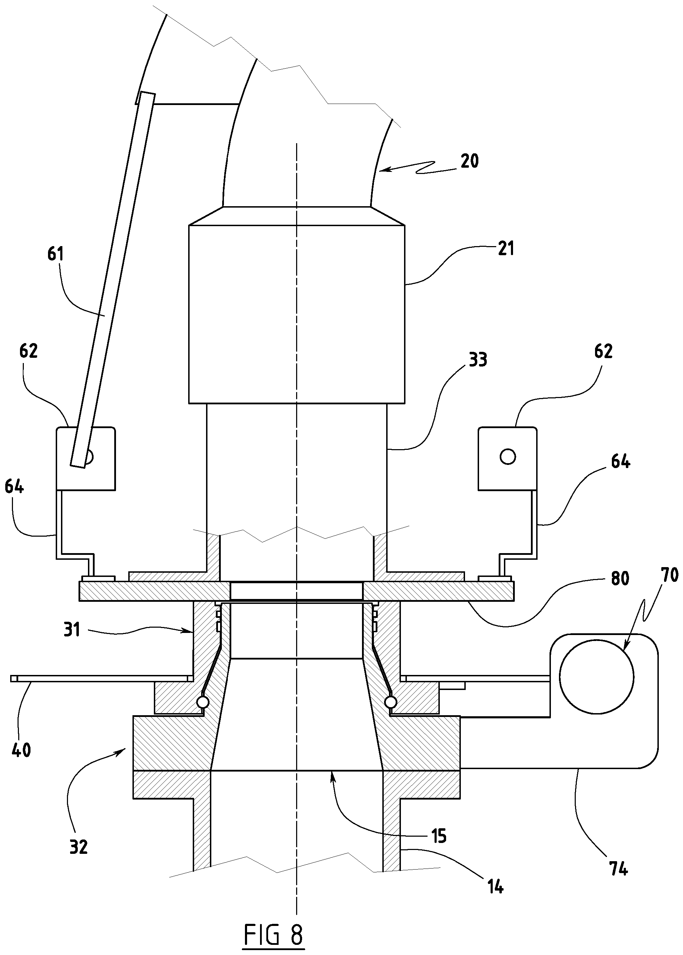

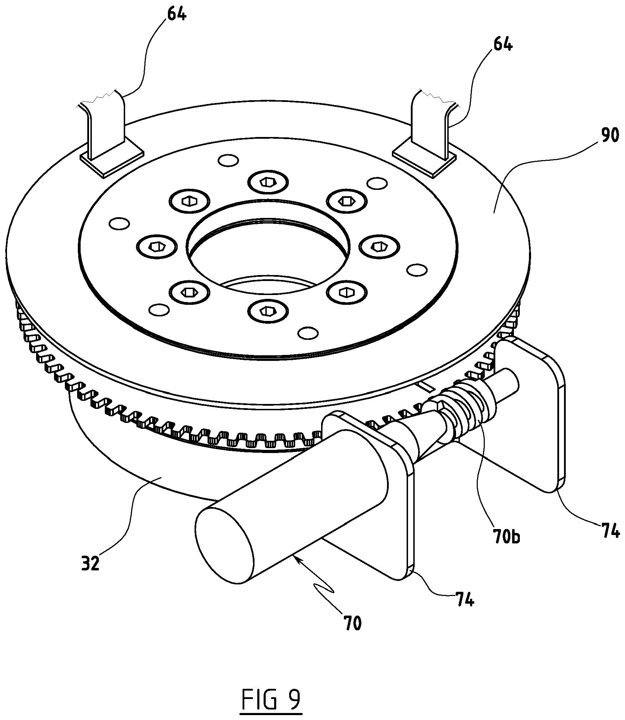

Figures 8 and 9 illustrate a simplified embodiment of the irrigator of the preceding figures illustrated in the foregoing.

This simplified embodiment is not equipped with the cogged wheels 41 and 42, and the end-run stops 62 are arranged on a single circular support deck 80 solidly constrained to the upper portion 31. The angular arrangement of the end-run stops 62 can be manually varied, by changing the point of application thereof on the deck 80.

The orientation of the median axis of the fan range, for example by 180 degrees, or any other angle (up to 360 degrees), is obtained also in this simplified embodiment by the activation of the base motor means 70, which produces rotation for any angle, of the entire upper portion 31 and with it the deck 80 which bears the end-run stops 62.

Obviously numerous modifications of a practical-applicational nature can be made to the present invention without forsaking the scope of the inventive idea as claimed in the following.

**LEGEND OF REFERENCE NUMERALS**

| | | | |
|---|---|---|---|
| 10 | irrigator | 50 | movement means |
| 11 | mobile carriage | 52 | oscillating arm |
| 12 | wheels | 53 | deviator body |
| 13 | flexible tube | 60 | command system |
| 14 | vertical tube | 61 | feeler |
| 15 | delivery mouth | 62 | end-run stop |
| 20 | dispensing head | 63 | plate |
| 21 | lower end portion | 64 | stem |
| 22 | wand | 70 | base motor means |
| 23 | outlet mouth | 70a | gear reducer |
| 30 | intermediate tubular support | 70b | endless screw |
| 31 | upper portion | 71 | 1st motor means |
| 32 | lower portion | 71a | gear reducer |
| 33 | upper sleeve of 31 | 71b | endless screw |
| 34 | lower sleeve of 31 | 72 | 2nd motor means |
| 35 | tubular body of 32 | 72a | gear reducer |
| 40 | base disc | 72b | endless screw |
| 40a | cogging | 74 | bracket of 70 |
| 41 | 1st cogged wheel | 75 | bracket of 70 |
| 42 | 2nd cogged wheel | 76 | bracket of 72 |
| 43 | slot | 80 | support deck |

## Claims

1. An irrigator comprising:
a carriage (11) that is mobile on a terrain to be irrigated, connected to a source of liquid supply, by means of a tube, having a delivery mouth (15) that is solidly constrained to the mobile carriage, having a vertical axis (A),
a dispensing head (20) able to launch the liquid to a distance, borne by the mobile carriage (11), in fluid connection with the delivery mouth (15),
coaxially rotatable with respect to the delivery mouth (15) about the vertical axis (A),
movement means (50), applied to the dispensing head (20), able to rotate the dispensing head (20) about the rotation axis (A), with an alternating motion, for an outward portion in a direction and for a return portion in an opposite direction, describing a circular sector,
a command system of the movement means (50), which commands inversion of the rotation direction of the head (20), comprising a feeler (61) that is solid in rotation with the dispensing head (20) and two end-run stops (62) able to abuttingly receive the feeler (61) in two distinct points of the circular trajectory (T) described thereby,
**characterised in that** it comprises:
- an intermediate tubular support, coaxial to the axis (A) interposed between the delivery mouth (15) and the dispensing head (20), which places the mouth (15) and the head (20) in connection, having:
- a lower portion (32) solidly constrained to the delivery mouth (15) and
- an upper portion (31) which supports the dispensing head (20), where the dispensing head is free to rotate about the axis (A) with respect to the upper portion (31),
- where the upper portion (31) and the lower portion (32) are coupled to one another, with a reciprocal rotatability, and with a liquid seal, about the axis (A), and
- where the end-run stops (62) are supported by the upper portion (31),
the intermediate tubular support (30) further comprises:
- a cogged base disc (40) provided with an enmeshing cogging, solidly constrained to the upper portion (31),
- a base motor means (70), solidly constrained to the lower portion (32), able to move the base cogged disc (40) in rotation, about the axis (A), with respect to the lower portion (32), so as to vary the orientation, with respect to the delivery mouth (15), of the end run stops (62) of the upper portion (31).

2. The irrigator of claim 1, wherein the command system of the movement means comprise:
- a feeler (61) solidly constrained in rotation with the dispensing head (20) describing a circular trajectory (T) and mobile, with respect to the dispensing head, between a first operating position, in which it commands the movement means (50) to rotate the dispensing head (20) in a direction, and a second operating position, in which it commands the movement means to rotate the dispensing head (20) in an opposite direction, and
- two end-run stops (62) able to abuttingly receive the feeler (61) in two distinct points of the circular trajectory (T) described thereby following the rotation of the dispensing head, so as to displace the feeler (61) respectively from the first operating position to the second operating position and vice versa,
**characterised in that** it comprises a first cogged wheel (41) coaxial with the axis (A) on which a first end-run stop (62) is fixed, and a second cogged wheel (42) coaxial with the axis A, on which the second end-run stop is fixed (62),
wherein the two cogged wheels (41, 42) are supported by the upper portion (31) of the intermediate support (30), with freedom to rotate about the axis (A), with respect to the upper portion (31), and
comprising a first motor means (71), supported by the base disc (40), able to move the first cogged wheel (41) in rotation about the axis (A), with respect to the base disc (40), and a second motor means (72) supported by the base disc (40), able to move the second cogged wheel (42) in rotation about the axis (A), with respect to the base disc (40).

3. The irrigator of claim 2, wherein the first cogged wheel (41) is superposed on the second cogged wheel (42), and wherein the first cogged wheel exhibits a slot (43) having an arched development, with a centre thereof in the axis (A), through which the stem of the second end-run (62) fixed to the second cogged wheel (42) passes.

4. The irrigator of claim 2, wherein the base motor means (70) comprises an electric gear reducer (70a), supported by a bracket (74) fixed solidly to the lower portion (32), which actuates an endless screw (70b), coupled to the cogging (40a) of the disc (40); where the rotation of the screw (70b) produces a consequent rotation of the disc (40) about the axis (A), and with it a same rotation of the whole upper portion (31) with respect to the lower portion (32).

5. The irrigator of claim 4, wherein each base motor means (71, 72) comprises an electric gear reducer (71a, 72a), supported by a bracket (75,76) fixed solidly to the base disc (40), which actuates an endless screw (71b, 72b), coupled to the cogging of the respective cog wheel (41, 42); where the rotation of the screw (71 b,72b) produces a consequent rotation of the respective cogged wheel (41, 42) about the axis (A), with respect to the upper portion (31).

## Patentansprüche

1. Beregnungsvorrichtung, Folgendes umfassend:
einen Wagen (11), der auf einem zu beregnenden Gelände beweglich und mittels eines Schlauchs mit einer Quelle für die Flüssigkeitszufuhr verbunden ist, wobei der Schlauch ein Abgabemundstück (15) aufweist, das fest am mobilen Wagen gehalten wird und eine vertikale Achse (A) aufweist,
einen Ausgabekopf (20), der in der Lage ist, die Flüssigkeit über eine Entfernung auszustoßen, der auf dem mobilen Wagen (11) in Fluidverbindung mit dem Abgabemundstück (15) getragen wird sowie im Verhältnis zum Abgabemundstück (15) um die vertikale Achse (A) koaxial drehbar ist,
Bewegungsmittel (50), die am Ausgabekopf (20) angebracht und in der Lage sind, den Ausgabekopf (20) in einer wechselnden Bewegung um einen Auswärtsabschnitt in eine Richtung und um einen Rückkehrabschnitt in eine entgegengesetzte Richtung um die Drehachse (A) zu drehen und dabei einen Kreissektor zu beschreiben,
ein Befehlssystem der Bewegungsmittel (50), das die Umkehr der Drehrichtung des Kopfes (20) anweist, umfassend einen Fühler (61), der in der Drehung mit dem Ausgabekopf (20) feststehend ist, und zwei Endanschläge (62), die in der Lage sind, den Fühler (61) an zwei eindeutigen Punkten der von ihm beschriebenen kreisförmigen Bewegungsbahn (T) anstoßend zu empfangen,
**dadurch gekennzeichnet, dass** sie Folgendes umfasst:
- einen mittleren röhrenförmige Träger, koaxial mit der Achse (A) und zwischen dem Abgabemundstück (15) und dem Ausgabekopf (20) eingesetzt, der das Mundstück (15) und den Kopf (20) in Verbindung bringt und Folgendes aufweist:
- einen unteren Abschnitt (32), der fest am Abgabemundstück (15) gehalten wird, und
- einen oberen Abschnitt (31), der den Ausgabekopf (20) trägt, wobei sich der Ausgabekopf im Verhältnis zum oberen Abschnitt (31) frei um die Achse (A) drehen kann,
- wobei der obere Abschnitt (31) und der untere Abschnitt (32) mit einer wechselseitigen Drehbarkeit und mit einer Flüssigkeitsdichtung um die Achse (A) miteinander gekoppelt sind und
- wobei die Endanschläge (62) vom unteren Abschnitt (31) getragen werden,
wobei der mittlere röhrenförmige Träger (30) Ferner Folgendes umfasst:
- eine gezahnte Grundscheibe (40), die mit einer eingreifenden Verzahnung versehen und fest mit dem oberen Abschnitt (31) verbunden ist,
- ein Grundmotormittel (70), das fest mit dem unteren Abschnitt (32) verbunden und in der Lage ist, die gezahnte Grundscheibe (40) im Verhältnis zum unteren Abschnitt (32) derart in Drehung um die Achse (A) zu versetzen, dass die Ausrichtung der Endanschläge (62) des oberen Abschnitts (31) im Verhältnis zum Abgabemundstück (15) verändert wird.

2. Beregnungsvorrichtung nach Anspruch 1, wobei das Befehlssystem der Bewegungsmittel Folgendes umfasst:
- einen Fühler (61), der in Drehung mit dem Ausgabekopf (20) fest gehalten wird und dabei eine kreisförmige Bewegungsbahn (T) beschreibt und der im Verhältnis zum Ausgabekopf zwischen einer ersten Betriebsposition, in der er die Bewegungsmittel (50) anweist, den Ausgabekopf (20) in eine Richtung zu drehen, und einer zweiten Betriebsposition, in der er die Bewegungsmittel anweist, den Ausgabekopf (20) in eine entgegengesetzte Richtung zu drehen, beweglich ist, und
- zwei Endanschläge (62), die in der Lage sind, den Fühler (61) anstoßend an zwei eindeutigen Punkten der kreisförmigen Bewegungsbahn (T) zu empfangen, die er der Drehung des Ausgabekopfes folgend beschreibt, so dass der Fühler (61) entsprechend von der ersten Betriebsposition in die zweite Betriebsposition und umgekehrt verlagert wird,
**dadurch gekennzeichnet, dass** sie ein erstes Zahnrad (41) koaxial mit der Achse (A), an welcher der erste Endanschlag (62) fixiert ist, und ein zweites Zahnrad (42) koaxial mit der Achse A, an der der zweite Endanschlag (62) fixiert ist, umfasst,
wobei die zwei Zahnräder (41, 42) vom oberen Abschnitt (31) des mittleren Trägers (30) getragen werden und sich dabei im Verhältnis zum oberen Abschnitt (31) frei um die Achse (A) drehen können und
umfassend ein erstes Motormittel (71), das getragen von der Grundscheibe (40) wird und in der Lage ist, das erste Zahnrad (41) im Verhältnis zur Grundscheibe (40) in Drehung um die Achse (A) zu versetzen, und ein zweites Motormittel (72), das getragen von der Grundscheibe (40) wird und in der Lage ist, das zweite Zahnrad (42) im Verhältnis zur Grundplatte (40) in Drehung um die Achse (A) zu versetzen.

3. Beregnungsvorrichtung nach Anspruch 2, wobei das erste Zahnrad (41) über dem zweiten Zahnrad (42) liegt und wobei das erste Zahnrad einen Schlitz (43) aufweist, der sich bogenförmig erstreckt mit seiner Mitte in der Achse (A), durch den der Schaft des zweiten Endanschlags (62) verläuft, der am zweiten Zahnrad (42) fixiert ist.

4. Beregnungsvorrichtung nach Anspruch 2, wobei das Grundmotormittel (70) ein elektrisches Vorsatzgetriebe (70a) umfasst, das von einer Halterung (74) getragen wird, die fest am unteren Abschnitt (32) fixiert ist, und das eine Schnecke (70b) betätigt, die mit der Verzahnung (40a) der Scheibe (40) gekoppelt ist, wobei die Drehung der Schnecke (70b) eine daraus resultierende Drehung der Scheibe (40) um die Achse (A) erzeugt und damit eine gleiche Drehung des gesamten oberen Abschnitts (31) im Verhältnis zum unteren Abschnitt (32).

5. Beregnungsvorrichtung nach Anspruch 4, wobei jedes Grundmotormittel (71, 72) ein elektrisches Vorsatzgetriebe (71a, 72a) umfasst, das von einer Halterung (75, 76) getragen wird, die fest an der Grundscheibe (40) fixiert ist und eine Schnecke (71b, 72b) betätigt, die mit der Verzahnung des entsprechenden Zahnrades (41, 42) gekoppelt ist, wobei die Drehung der Schnecke (71b, 72b) eine daraus resultierende Drehung des entsprechenden Zahnrades (41, 42) um die Achse (A) im Verhältnis zum oberen Abschnitt (31) erzeugt.

## Revendications

1. Irrigateur comprenant :
un chariot (11) pouvant se déplacer sur le terrain à irriguer, relié à une source d'alimentation en liquide, au moyen d'un tube, disposant d'une bouche d'alimentation (15) qui est solidement contrainte au chariot mobile, disposant d'un axe vertical (A),
une tête de distribution (20) capable de projeter le liquide à une distance, supportée par le chariot mobile (11), en raccordement fluidique avec la bouche d'alimentation (15) et pouvant pivoter coaxialement par rapport à la bouche d'alimentation (15) selon l'axe vertical (A),
un moyen de mouvement (50), appliqué à la tête de distribution (20), capable de faire pivoter la tête de distribution (20) selon l'axe de rotation (A), avec un mouvement alternatif, pour une partie extérieure dans un sens et pour une partie de retour dans un sens opposé, définissant un secteur circulaire,
un système de commande du moyen de mouvement (50), qui commande l'inversion du sens de rotation de la tête (20), comprenant un palpeur (61) qui est solidaire en rotation avec la tête de distribution (20) et deux butées d'arrêt (62) capables de recevoir en butée le palpeur (61) en deux points distincts de la trajectoire circulaire (T) décrite par ce dernier,
**caractérisé en ce qu'**il comprend :
- un support tubulaire intermédiaire, coaxial à l'axe (A) interposé entre la bouche d'alimentation (15) et la tête de distribution (20), qui relie la bouche (15) et la tête (20), possédant :
- une partie inférieure (32) solidement contrainte à la bouche d'alimentation (15) etune partie supérieure (31) qui supporte la tête de distribution (20), la tête de distribution pouvant pivoter librement autour de l'axe (A) par rapport à la partie supérieure (31),
- la partie supérieure (31) et la partie inférieure (32) étant couplées entre elles, avec une rotativité réciproque, et avec un joint liquide, autour de l'axe (A), et
- les butées d'arrêt (62) étant supportées par la partie supérieure (31), le support tubulaire intermédiaire (30) comprenant en outre :
- un disque de base cranté (40) doté d'un crantage venant en prise, solidementcontraint à la partie supérieure (31).
- un moyen moteur de base (70), solidement contraint à la partie inférieure (32), capable de déplacer le disque cranté de base (40) en rotation, autour de l'axe (A), par rapport à la partie inférieure (32), de façon à modifier l'orientation, par rapport à la bouche d'alimentation (15), des butées d'arrêt (62) de la partie supérieure (31).

2. Irrigateur selon la revendication 1, dans lequel le système de commande du moyen de mouvement comprend :
- un palier (61) solidement contraint en rotation avec la tête de distribution (20) décrivant une trajectoire circulaire **(T)** et étant mobile, par rapport à la tête de distribution, entre une première position de fonctionnement, dans laquelle il commande le moyen de mouvement (50) pour faire pivoter la tête de distribution (20) dans un sens, et une seconde position de fonctionnement, dans laquelle il commande le moyen de mouvement pour faire pivoter la tête de distribution (20) dans un sens opposé, et
- deux butées d'arrêt (62) capables de recevoir en butée le palpeur (61) en deux points distincts de la trajectoire circulaire **(T)** décrite par ce dernier suivant la rotation de la tête de distribution, afin de déplacer le palier (61) respectivement depuis la première position de fonctionnement vers la seconde position de fonctionnement, et inversement,
**caractérisé en ce qu'**il comprend une première roue crantée (41) coaxiale à l'axe (A) sur laquelle une première butée d'arrêt (62) est fixée et une deuxième roue crantée (42) coaxiale à l'axe A, sur laquelle la deuxième butée d'arrêt est fixée (62),
dans lequel les deux roues crantées (41, 42) sont supportées par la partie supérieure
(31) du support intermédiaire (30), pouvant pivoter librement autour de l'axe (A), par rapport à la partie supérieure, et
comprenant un premier moyen moteur (71), supporté par le disque de base (40), capable de déplacer la première roue crantée (41) en rotation autour de l'axe (A), par rapport au disque de base (40), et un second moyen moteur (72) supporté le disque de base (40), capable de déplacer la deuxième roue crantée (42) en rotation autour de l'axe (A), par rapport au disque de base (40).

3. Irrigateur selon la revendication 2, dans lequel la première roue crantée (41) est superposée
présente une fente (43) élaborée selon une forme arquée, avec son centre dans l'axe (A), par lequel passe la tige de la deuxième butée d'arrêt (62) fixée à la deuxième roue crantée (42).

4. Irrigateur selon la revendication 2, dans lequel le moyen moteur de base (70) comprend un réducteur à engrenage (70a), supporté par un support (74) solidement fixé à la partie inférieure (32), qui actionne une vis sans fin (70b), couplée au crantage (40a) du disque (40) ; la rotation de la vis (70b) entraînant une rotation consécutive du disque (40) autour de l'axe (A), ainsi qu'une rotation identique de l'ensemble de la partie supérieure (31) par rapport à la partie inférieure (32).

5. Irrigateur selon la revendication 4, dans lequel chaque moyen moteur de base (71, 72) comprend un réducteur à engrenage (71a, 72a), supporté par un support (75,76) solidement fixé au disque de base (40), qui actionne une vis sans fin (71b, 72b), couplée au crantage de la roue crantée respective (41, 42); la rotation de la vis (71b, 72b) entraînant une rotation consécutive de la roue crantée respective (41, 42) autour de l'axe (A), par rapport à la partie inférieure (31).
